# EUROPÄISCHE PATENTSCHRIFT

(11) **EP 0 762 785 B1**
(45) Veröffentlichungstag und Bekanntmachung des Hinweises auf die Patenterteilung: **24.07.2002**
(21) Anmeldenummer: 96114086.0
(22) Anmeldetag: 03.09.1996
(51) Int. Cl.: H04Q 3/00, H04M 3/42

(54) **Verfahren zur Unterstützung von Diensten in Netzknoten von Telekommunikationsnetzen**
Method for supporting services in the telecommunication network nodes
Procédé de soutien des services dans les noeuds de réseaux de télécommunications

(30) Priorität: 11.09.1995 DE 19533546
(43) Veröffentlichungstag der Anmeldung: 12.03.1997
(73) Patentinhaber: SIEMENS AKTIENGESELLSCHAFT, 80333 München (DE)
(72) Erfinder: Becher, Reinhard, Dr.rer.nat., 81245 München (DE)

(56) Entgegenhaltungen:
- EP-A- 0 654 930
- US-A- 5 353 331
- PATENT ABSTRACTS OF JAPAN vol. 018, no. 608 (E-1633), 18. November 1994 (1994-11-18) & JP 06 232867 A (NIPPON TELEGR & TELEPH CORP), 19. August 1994 (1994-08-19)

## Beschreibung

Die Erfindung betrifft ein Verfahren zur Unterstützung von Diensten in Netzknoten von Telekommunikationsnetzen gemäß dem Oberbegriff des Patentanspruchs 1.

In Telekommunikationsnetzen, wie beispielsweise Mobilfunknetzen und intelligenten Netzen, besteht die Möglichkeit, zwischen zwei Netzknoten auf Protokollebene durch gegenseitige Vereinbarung bzw. Verhandlung eine gemeinsam unterstützte Protokollversion zur Durchführung von Diensten für die Teilnehmer der Netze festzulegen. Die Vereinbarung bzw. Verhandlung eines gemeinsam nutzbaren Übertragungsprotokolls liefert jedoch keine Informationen über Art und Umfang der in den Netzknoten der Telekommunikationsnetze jeweils unterstützten Dienste. Dies trifft insbesondere auf netzbezogene spezifische Dienste in den einzelnen Ländern des nach dem GSM-Standard (Global System for Mobile Communication) betriebenen länderübergreifenden Mobilfunknetzes zu. Der Aufbau des die Struktur eines intelligenten Netzes unterstützenden GSM-Mobilfunknetzes ist beispielsweise aus dem Aufsatz "Intelligente Netze beschleunigen Einführung neuer Dienste", telcom report 12 (1989), Heft 5 bekannt. Werden darin Anfragen an die Teilnehmerdatenbasen zur Übermittlung von Daten über die Netzgrenzen des Telekommunikationsnetzes hinweg gerichtet, so muß die Adresse des anfragenden Netzknotens üblicherweise aus der TCAP-Adresse (Transaction Capabilities Application Part) bestimmt werden, was eine Verletzung des OSI-Schichtenmodells zur Folge hat. In zunehmenden Maße müssen Dienste - insbesondere auch neue Dienste - in einem Telekommunikationsnetz mit verschiedenen Netzknotenherstellern und deren unterschiedlichen unterstützten Programmversionen zur Durchführung der Dienste netzweit und/oder netzübergreifend unterstützt werden.

Aus dem Dokument US535331 ist ein Verfahren zur Unterstützung von Diensten in einem besuchten Netz bekannt. Zur Abwicklung eines Dienstes sendet der ULR eine Anfrage an den HLR.

Es ist Aufgabe der vorliegenden Erfindung, ein Verfahren zur Unterstützung von Diensten in Netzknoten von Telekommunikationsnetzen anzugeben, durch das eine gemeinsam nutzbare Diensteebene zwischen verschiedenen Netzknoten - auch netzübergreifend - vereinbart werden kann.

Diese Aufgabe wird gemäß der Erfindung durch die Merkmale des Patentanspruchs 1 gelöst. Weiterbildungen der Erfindung sind in Unteransprüchen angegeben.

Demnach werden zwischen Netzknoten in einer Nachricht Informationen zur Identifikation des anfragenden Netzknotens und des Telekommunikationsnetzes sowie Informationen zur Identifikation des Netzknotenherstellers und der vom Netzknotenhersteller unterstützten Programmversion zusätzlich mitgesendet. Mit den von dem befragten Netzknoten empfangenen Informationen erfolgt die Adressierung einer Dienstetabelle, in der Informationen über die anfragenden Netzknoten und Telekommunikationsnetze, über die Hersteller der anfragenden Netzknoten und über die von den Netzknotenherstellern eingerichteten Programmversionen zur Unterstützung der Dienste eingetragen sind. Durch Vergleich der von dem anfragenden Netzknoten gesendeten Informationen mit den in der Dienstetabelle adressierten Informationen wird eine größtmögliche unterstützte Diensteebene von dem befragten Netzknoten ermittelt. Durch Verwendung der Dienstetabelle in dem jeweils befragten Netzknoten, die über die von anfragenden Netzknoten unterstützten Dienste informiert, ist es auf einfache Weise möglich, abzufragen, ob und in welchem Umfang die Dienste - auch über Netzgrenzen hinweg - zwischen Netzknoten verschiedener Hersteller und Programmversionen unterstützt werden.

Die Vorteile des erfindungsgemäßen Verfahrens liegen darin, daß bei der Einführung neuer Dienste die Schnittstellen zwischen den Netzknoten nicht verändert werden müssen und die Dienste trotz verschiedener Netzknotenhersteller und unterschiedlich unterstützter Programmversionen gemäß der gemeinsam vereinbarten größtmöglichen Diensteebene ausgeführt werden können. Darüber hinaus braucht lediglich eine geringe Anzahl von Schnittstellenabsprachen - nämlich nur in der Richtung von dem befragten Netzknoten zum anfragenden Netzknoten - durchgeführt zu werden. Die Kontrolle über die Dienste bleibt bei dem befragten Netzknoten, der nur die Dienste unterstützt, die für die betreffenden anfragenden Netzknoten auf Grund der in der Dienstetabelle gespeicherten Informationen eingerichtet sind.

Die Erfindung wird anhand von in Figuren dargestellten Ausführungsbeispielen näher erläutert. Im einzelnen zeigen:
- Figur 1: den Nachrichtenfluß zwischen Einrichtungen eines Mobilfunknetzes bei einer von einer Mobilvermittlungsstelle an eine zentrale Teilnehmerdatenbasis gerichteten Anfrage,
- Figur 2: den Nachrichtenfluß zwischen Einrichtungen eines Mobilfunknetzes bei einer von einer dezentralen Teilnehmerdatenbasis an eine zentrale Teilnehmerdatenbasis gerichteten Anfrage,
- Figur 3: den Inhalt einer in der zentralen Teilnehmerdatenbasis eingerichteten Dienstetabelle zur Speicherung von Informationen über die unterstützten Dienste und
- Figur 4: den Nachrichtenfluß zwischen den Einheiten eines Intelligenten Netzes am Beispiel der Unterstützung eines netzbezogenen Dienstes über Netzgrenzen hinweg.

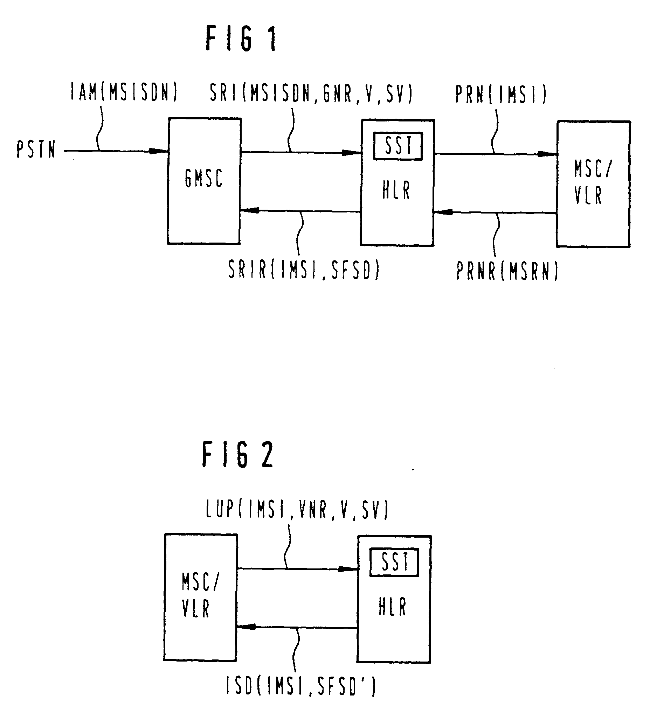

Figur 1 zeigt in einem Blockschaltbild den Nachrichtenfluß zwischen Einrichtungen eines digitalen, zellular aufgebauten länderübergreifenden Mobilfunknetzes nach dem GSM-Standard. Die Einrichtungen, die als Netzknoten des Mobilfunknetzes aufzufassen sind, bestehen im gewählten Beispiel aus einer Mobilvermittlungsstelle GMSC, einer zentralen Teilnehmerdatenbasis HLR und einer dezentralen Teilnehmerdatenbasis VLR mit zugehöriger Mobilvermittlungsstelle MSC. Die Mobilvermittlungsstelle GMSC, die an der Schnittstelle des Mobilfunknetzes zu anderen Telekommunikationsnetzen vorgesehen ist, empfängt aus dem öffentlichen Fernsprechnetz PSTN eine Nachricht IAM (Initial Adress Message),in der ein an einen Mobilfunkteilnehmer des Mobilfunknetzes gerichteter Anruf eintrifft. Dabei wird in der Nachricht IAM die Teilnehmerrufnummer MSISDN des angerufenen Mobilfunkteilnehmers übertragen.

Aufgrund der empfangenen Teilnehmerrufnummer MSISDN wird in einer Nachricht SRI (Send Routing Info) eine Anfrage (Interrogation) von der Mobilvermittlungsstelle GMSC an die zentrale Teilnehmerdatenbasis HLR gerichtet. Die Anfrage dient dazu, das Aufenthaltsgebiet, in dem der angerufene Mobilfunkteilnehmer sich aktuell befindet, zu ermitteln. Das Aufenthaltsgebiet wird durch Aussenden einer Nachricht PRN (Provide Roaming Number) von der dezentralen Teilnehmerdatenbasis HLR an die dezentrale Teilnehmerdatenbasis VLR angefragt. Es wird eine internationale Teilnehmeridentifikationsnummer IMSI (International Mobile Subscriber Identity) in der Nachricht PRN mitgesendet. Die dezentrale Teilnehmerdatenbasis VLR liefert eine Mobilitätsnummer MSRN (Mobile Subscriber Roaming Number), die in einer Nachricht PRNR zur zentralen Teilnehmerdatenbasis HLR rückgesendet wird.

In der Nachricht SRI werden zusätzlich zu der Teilnehmerrufnummer MSISDN eine Information GNR zur Identifikation der anfragenden Mobilvermittlungsstelle GMSC, eine weitere Information V zur Identifikation des Herstellers der Mobilvermittlungsstelle GMSC und eine weitere Information SV zur Identifikation der vom Hersteller der anfragenden Mobilvermittlungsstelle GMSC aktuell unterstützten Programmversion zur Ausführung eines bestimmten Dienstes mitgesendet. Durch die Information GNR läßt sich jeder anfragende Netzknoten in ein Telekommunikationsnetz eindeutig kennzeichnen, so daß feststellbar ist, aus welchem Netz die Anfrage kommt. Beispielsweise besteht die Information GNR aus Ziffern einer Teilnehmerrufnummer, die die Länderkennzahl (Country Code) sowie die Netzkennzahl (Network Destination Code) des Netzes, aus dem die Anfrage gekommen ist, umfassen. Die Information GNR stellt eine Mobilvermittlungsstellennummer dar, mit der die anfragende Mobilvermittlungsstelle GMSC identifizierbar ist.

Von dem durch die Information V identifizierten Netzknotenhersteller wurde die Vermittlungseinrichtung zur Übernahme der durch die Mobilität des Mobilfunkteilnehmers bedingten besonderen vermittlungstechnischen Funktionen im Mobilfunknetz eingerichtet. Der Hersteller der anfragenden Mobilvermittlungsstelle GMSC stellt eine oder mehrere den Dienst jeweils unterstützende Programmversionen zur Verfügung. Die von den Netzknotenhersteller aktuell unterstütze Programmversion wird der befragten zentralen Teilnehmerdatenbasis HLR durch die Information SV mitgeteilt. Durch die in der Nachricht SRI zusätzlich übertragenen Informationen GNR, V und SV ist festgelegt, ob und in welchem Umfang Dienste von der anfragenden Mobilvermittlungsstelle GMSC - auch über Netzgrenzen - hinweg bei Anfragen an Datenbasen unterstützt werden. Der Grad der Diensteunterstützung kann beispielsweise bei Anfragen, die über Netzgrenzen hinweg ausgesendet werden, auch nur aus der Länderkennzahl und der Netzkennzahl des Telekommunikationsnetzes dann bestimmt werden, wenn zwischen den Netzbetreibern der verschiedenen Telekommunikationsnetze diesbezüglich Abkommen bestehen.

Mit den von der zentralen Teilnehmerdatenbasis HLR empfangenen Zusatzinformationen GNR, V und SV wird eine Dienstetabelle SST in der befragten zentralen Teilnehmerdatenbasis HLR adressiert, die Informationen über anfragende Netzknoten, Telekommunikationsnetze, Netzknotenhersteller und Programmversionen für die jeweils zu unterstützenden Dienste speichert. Im vorliegenden Beispiel wird durch die Zusatzinformationen GNR, V, SV der Eintrag in der Dienstetabelle SST ausgewählt, der für die anfragende Mobilvermittlungsstelle GMSC eingerichtet wurde. Durch Vergleich der übermittelten und von der dezentralen Teilnehmerdatenbasis HLR empfangenen Informationen, insbesondere der Informationen V und SV, mit den entsprechenden Informationen in der Dienstetabelle SST wird von der dezentralen Teilnehmerdatenbasis HLR eine größtmögliche Diensteebene zwischen den Netzknoten ermittelt. Die Ermittlung der maximal möglichen und erlaubten Diensteebene zwischen Netzknoten ist dadurch auch bei verschiedenen Netzknotenherstellern und/oder Programmversionen innerhalb eines Telekommunikationsnetzes oder über Netzgrenzen hinweg zwischen mehreren Netzen möglich.

Nach Überprüfung, ob für den angerufenen Mobilfunkteilnehmer anhand zugehöriger Teilnehmerdaten Dienste registriert sind und Überprüfung anhand der Dienstetabelle SST, ob die gewünschten Dienste unterstützt werden können, sendet die denzentrale Teilnehmerdatenbasis HLR die Nachricht PRN mit gegebenenfalls zusätzlichen Teilnehmerinformationen - beispielsweise aufgrund der Nutzung eines Dienstes eines Intelligenten Netzes - aus. Nach Empfang der Nachricht PRNR von der dezentralen Teilnehmerdatenbasis VLR gibt die dezentrale Teilnehmerdatenbasis HLR dienstespezifische Daten SFSD zur Abwicklung des gewünschten Dienstes zusammen mit der internationalen Teilnehmeridentifikationsnummer IMSI in einer Nachricht SRIR an die anfragende Mobilvermittlungsstelle GMSC ab.

Figur 2 zeigt in einem Blockschaltbild den Nachrichtenfluß zwischen Einrichtungen des Mobilfunknetzes für den Fall, daß eine Anfrage (Location Update) von der dezentralen Teilnehmerdatenbasis VLR an die zentrale Teilnehmerdatenbasis HLR gerichtet wird, durch die wegen eines Aufenthaltsortwechsels des Mobilfunkteilnehmers dessen Teilnehmerdaten in der zentralen Teilnehmerdatenbasis zu erneuern sind. Die für den Mobilfunkteilnehmer zuständige neue dezentrale Teilnehmerdatenbasis VLR sendet die Anfrage in einer Nachricht LUP zur dezentralen Teilnehmerdatenbasis HLR aus, die die relevanten Teilnehmerdaten daraufhin zur anfragenden dezentralen Datenbasis VLR rücksendet und die entsprechenden Teilnehmerdaten in der bisher zuständigen dezentralen Teilnehmerdatenbasis löscht. In der Nachricht LUP wird die internationale Teilnehmeridentifikationsnummer IMSI übertragen, die von der neuen dezentralen Teilnehmerbasis VLR aus der bisherigen dezentralen Teilnehmerdatenbasis zuvor angefordert und bereitgestellt wurde.

Darüber hinaus enthält die Nachricht LUP eine Information VNR zur Identifikation der anfragenden dezentralen Teilnehmerdatenbasis VLR, eine Information V zur Identifikation des Herstellers der anfragenden Teilnehmerdatenbasis VLR und eine Information SV zur Identifikation der vom Hersteller des Netzknotens aktuell unterstützten Programmversion. Diese in der Nachricht LUP mitgesandten Zusatzinformationen ermöglichen die Adressierung der in der zentralen Teilnehmerdatenbasis HLR zur Verfügung stehenden Dienstetabelle SST. Die Dienstetabelle SST liefert Informationen über die von der anfragenden dezentralen Teilnehmerdatenbasis VLR unterstützten Dienste abhängig von dem jeweiligen Netzknotenhersteller und dessen eingerichteten Programmversionen. Durch Vergleich der eintreffenden Informationen mit den in der Dienstetabelle SST für die anfragende dezentrale Teilnehmerdatenbasis VLR gespeicherten Informationen bestimmt die zentrale Teilnehmerdatenbasis HLR die Diensteebene, die gemeinsam maximal unterstützbar ist. Ergibt die Auswertung der Dienstetabelle SST, daß der oder die von der anfragenden dezentralen Teilnehmerdatenbasis VLR gewünschten Dienste unterstützt werden, erfolgt das Speichern der Informationen V und SV zusammen mit der Information VNR in der Dienstetabelle SST und das Aussenden von dienstespezifisichen Daten SFSD' in einer Nachricht ISD. Dabei können , falls erforderlich, zusätzliche Teilnehmerinformationen - beispielsweise aufgrund der Nutzung eines Dienstes in einem Intelligenten Netz - mitgesendet werden. Die Zuordnung der Daten SFSD' zum richtigen Mobilfunkteilnehmer erfolgt anhand der in der Nachricht ISD zusammen mit den Daten übertragenen internationalen Teilnehmeridentifikationsnummer IMSI.

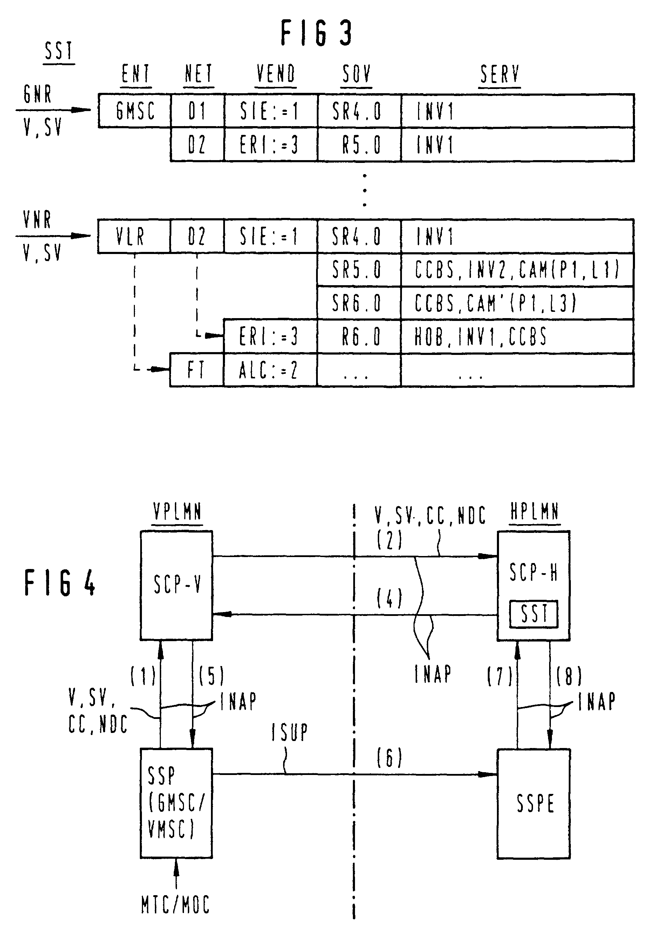

Figur 3 zeigt die Dienstetabelle SST zur Information über die von den anfragenden Netzknoten gemäß Figur 1 und Figur 2 unterstützten Dienste. Dabei weist die Dienstetabelle SST mehrere Tabellenfelder auf, deren Inhalt jeweils unter einer bestimmten Adresse gelesen und geändert werden kann. Ein erstes Tabellenfeld ENT enthält eine Information über den anfragenden Netzknoten, ein weiteres Tabellenfeld NET eine Information über das jeweilige Telekommunikationsnetz oder den Netzbetreiber des jeweiligen Telekommunikationsnetzes, ein weiteres Tabellenfeld VEND eine Information über den Hersteller bzw. Lieferant des anfragenden Netzknotens, ein weiteres Tabellenfeld SOV eine Information über die vom Netzknotenhersteller aktuell unterstützte Programmversion zur Ausführung des jeweiligen Dienstes und ein letztes Tabellenfeld SERV eine Information über den oder die jeweils unterstützten Dienste.

Aufgrund der von der anfragenden Mobilvermittlungsstelle GMSC gemäß Figur 1 empfangenen Informationen GNR und V, SV wird der Eintrag in der Dienstetabelle SST adressiert, der die Informationen über die von der Mobilvermittlungsstelle GMSC unterstützten Dienste enthält. Für das vorliegende Beispiel ist die anfragende Mobilvermittlungsstelle GMSC gemäß einem ersten Tabelleneintrag in dem D1-Mobilfunknetz (d.h. in dem von der DeTeMobil in Deutschland betriebenen Mobilfunknetz) von dem Netzknotenhersteller SIE (Siemens) eingerichtet und mit einer aktuell unterstützten Programmversion SR4.0 zur Ausführung eines oder mehrerer Dienste INV1, die im Intelligenten Netz zur Verfügung stehen, versehen worden. Die jeweiligen Netzknotenhersteller erhalten zur ihrer eindeutigen Identifikation eine feste Kennung. Der Netzknotenhersteller SIE erhält beispielsweise die Kennung SIE:=1. Die anfragende Mobilvermittlungsstelle GMSC existiert gemäß einem zweiten Tabelleneintrag auch in dem D2-Mobilfunknetz (d.h. in dem von Mannesmann in Deutschland betriebenen Mobilfunknetz) angeordnet, wobei ein anderer Netzknotenhersteller ERI® (ERICSSON) die Mobilvermittlungsstelle GMSC in diesem Telekommunikationsnetz unter Verwendung einer aktuell unterstützten Programmversion R5.0 zur Ausführung des oder der Dienste INV1 eingerichtet hat. Der Hersteller und Lieferant des anfragenden Netzknotens erhält als feste Kennung den Wert ERI:=3.

Für das Beispiel gemäß Figur 2 zeigt die Dienstetabelle SST die für die anfragende dezentrale Teilnehmerdatenbasis VLR gespeicherten Informationen, die mit den in der zentralen Teilnehmerdatenbasis eintreffenden Informationen VNR und V, SV in der Tabelle adressiert werden. Die dezentrale Teilnehmerdatenbasis VLR ist beispielsweise im D2-Mobilfunknetz von dem Netzknotenhersteller SIE eingerichtet und mit der aktuell unterstützten Programmversion SR4.0 zur Ausführung des Dienstes INV1 versehen worden. Darüber hinaus sind weitere Programmversionen SR5.0 bzw. SR6.0 von dem Netzknotenhersteller SIE im D2-Mobilfunknetz zur Unterstützung eines teilnehmerbezogenen Dienstes CCBS (Call Back To Busy Subscriber), eines Dienstes INV2 im Intelligenten Netz und eines netzbezogenen Dienstes CAM bzw. zur Unterstützung der Dienste CCBS und CAM' vorgesehen. Der beispielsweise von ETSI (European Telecommunication Standardization Institute),SMG1 in der GSM-Spezifikation 02.78-version 0.4.0, vom 14. März 1995 beschriebene Dienst CAM (CAMEL® - Customised Applications for Mobile Network Enhanced Logic) ist ein netzbezogener Dienst, der einem Mobilfunkteilnehmer, der sich außerhalb seines Heimat-Mobilfunknetzes aktuell bewegt, netzbetreiberspezifische Dienste auch dort zur Verfügung stellen kann. Dabei werden beim Aufbau der Anrufverbindung entsprechende Aktivitäten von einer Logikeinheit (camel service function) an vorgegebenen Stellen (camel detection points) initiert. Die Einführung dieses netzbezogenen Dienstes im bestehenden GSM-Mobilfunknetz ist in mehrere Phasen (phases) und Stufen (levels) aufgeteilt, in denen jeweils der von den Netzknoten unterstützte Funktionsumfang festzulegen ist. Daher enthält der in der Dienstetabelle SST eingetragene Dienst CAM auch Angaben über die von dem jeweilen Netzknoten unterstützte Phase und Stufe. Die Dienstetabelle SST gibt an, daß für die anfragende dezentrale Teilnehmerdatenbasis VLR in der Programmversion SR5.0 der Dienst CAM in der ersten Phase P1 und ersten Stufe L1 unterstützt werden kann. Darüber hinaus existiert für die anfragende dezentrale Teilnehmerdatenbasis VLR eine Programmversion SR6.0, mit der der Dienst CAM in der ersten Phase P1 und dritten Stufe L3 genutzt wird.

Im D2-Mobilfunknetz ist die dezentrale Teilnehmerdatenbasis VLR auch von dem Netzknotenhersteller ERI mit einer aktuell unterstützten Programmversion R6.0 zur Ausführung eines oder mehrerer Dienste eingesetzt. Dabei werden ein weiterer teilnehmerbezogener Dienst HOB (hot billing) sowie die Dienste INV1 und CCBS von der anfragenden dezentralen Teilnehmerdatenbasis VLR unter der angegebenen Programmversion unterstützt. Die dezentrale Teilnehmerdatenbasis VLR ist darüber hinaus in dem FT-Mobilfunknetz (d.h. in dem von der France Telecom in Frankreich betriebenen Mobilfunknetz) angeordnet und von einem Netzknotenhersteller ALC (Alcatel), dem die feste Kennung ALC:=2 zugeteilt ist, eingerichtet.

Netzknoten in einem Telekommunikationsnetz, die keine Informationen über Netzknotenhersteller und/oder aktuell unterstützte Programmversion enthalten, werden bei der Unterstützung der Dienste mit dem niedrigsten Dienstegrad versehen. Netzknoten, die eine unbekannte Netzknotenherstelleridentität aufweisen, werden ebenfalls nur mit dem niedrigsten Dienstegrad unterstützt. Netzknoten, die eine höhere Programmversion als die in der Dienstetabelle SST eingerichtete Programmversion unterstützen können, werden mit der maximal unterstützten Programmversion für die entsprechenden Dienste versehen. Die in den Tabellenfeldern VEND und SOV gespeicherten Informationen sind in zwei Datenbytes codiert, von denen das erste Datenbyte Informationen zur Identifikation der Netzknotenhersteller und das zweite Datenbyte die Informationen zur Identifikation der vom Netzknotenhersteller unterstützten Programmversion angeben.

Figur 4 zeigt in einem Blockschaltbild den Nachrichtenfluß zwischen Einheiten eines Intelligenten Netzes zur Unterstützung des netzbezogenen Dienstes "CAMEL®" im Mobilfunknetz über Netzgrenzen hinweg. Die Einheiten des Intelligenten Netzes sind Dienstevermittlungseinheiten (Service Switching Points) und Dienstesteuerungseinheiten (Service Control Points), die die zur Unterstützung der Dienste erforderlichen Vermittlungs- und Dienstefunktionen steuern. Da das Mobilfunknetz nach dem GSM-Standard die Struktur eines Intelligenten Netzes unterstützt, können die Mobilvermittlungsstellen des Mobilfunknetzes als Dienstevermittlungseinheiten und die Teilnehmerdatenbasen des Mobilfunknetzes als Dienstesteuerungseinheiten aufgefaßt werden. Die Dienstevermittlungseinheiten und Dienstesteuerungseinheiten bilden die Netzknoten des Telekommunikationsnetzes, in denen die IN-Dienste (Intelligent Network Services) unterstützt werden. Gemäß "CAMEL" werden die netzbetreiberspezifischen Dienste dem Mobilfunkteilnehmer während des Aufbaus der Anrufverbindung bei ankommenden oder abgehenden Anrufen auch dann zur Verfügung gestellt, wenn der Mobilfunkteilnehmer sich nicht in seinem Heimat-Mobilfunknetz HPLMN, sondern in einem anderen Netz, dem Besucher-Mobilfunknetz VPLMN, gerade aufhält.

Im Besucher-Mobilfunknetz VPLNM erkennt eine Dienstevermittlungseinheit SSP an den vorgegebenen Stellen im Anrufaufbau (camel detection points), daß für einen vom Mobilfunkteilnehmer abgehenden Anruf MOC (Mobile Originating Call) oder für einen beim Mobilfunkteilnehmer ankommenden Anruf MTC (Mobile Terminating Call) der netzbezogene Dienst unterstützt werden soll. Die Dienstevermittlungseinheit SSP wird bei dem abgehenden Anruf von einer Mobilvermittlungsstelle VMSC (Visited Mobile Switching Center) und bei dem ankommenden Anruf von einer Mobilvermittlungsstelle GMSC (Gateway Mobile Switching Center) des Mobilfunknetzes gebildet. Von der Dienstevermittlungseinheit SSP werden in einer Nachricht, die gemäß einem zwischen den Einheiten des Intelligenten Netzes bestehenden Übertragungsprotokolls INAP (Intelligent Network Application Part) übertragen wird, Informationen CC (Country Code) und NDC (Network Destination Code) zur Identifikation des anfragenden Netzknotens bzw. des Telekommunikationsnetzes, aus dem die Anfrage kommt, und Informationen V und SV zur Identifikation des Netzknotenherstellers und der vom Netzknotenhersteller aktuell unterstützten Programmversion zur Ausführung des Dienstes ausgesendet (1). Eine Dienstesteuerungseinheit SCP-V im Besucher-Mobilfunknetz VPLMN empfängt die Informationen, in denen implizit die von dem anfragenden Netzknoten unterstützten Dienste - im vorliegenden Beispiel Phase und Stufe der UNterstützung des eingeführten "CAMEL®"-Dienstes - mitgeteilt werden.

Die Dienstesteuerungseinheit SCP-V ist als die Logikeinheit (camel service function) aufzufassen, die alle zur Nutzung der netzbetreiberbezogener Dienste erforderlichen Aktivitäten steuert. Die Informationen CC, NDC und V, SV werden durch das Übertragungsprotokoll INAP in einer entsprechenden Nachricht zu einer Dienstesteuerungseinheit SCP-H des Heimat-Mobilfunknetzes HPLMN weitergeleitet (2). Für den Fall, daß zwischen Besucher-Mobilfunknetz VPLMN und Heimat-Mobilfunknetz HPLMN ein gegenseitiger Nachrichtenaustausch (Internetworking) zur Unterstützung des netzbezogenen Dienstes möglich ist, werden die Zusatzinformationen CC, NDC und V, SV direkt von der anfragenden Dienstevermittlungseinheit SSP zur Dienstesteuerungseinheit SCP-H übertragen.

Die Dienstesteuerungseinheit SCP-H bestimmt aus den eintreffenden Informationen Phase und Stufe der Unterstützung des Dienstes und vergleicht sie mit den in der Dienstetabelle SST gespeicherten Informationen. Letztgenannte Informationen beziehen sich auf die anfragenden Netzknoten, die zugehörigen Telekommunikationsnetze, die Netzknotenhersteller und die vom Netzknotenhersteller jeweils aktuell unterstützten Programmversionen (3). Ergibt der Vergleich, daß der aus den empfangenen Informationen ermittelte Diensteumfang zur Unterstützung des "CAMEL®"-Dienstes in dem aus der Dienstetabelle SST erkennbaren Diensteumfang zur Unterstützung des "CAMEL"-Dienstes enthalten ist, werden die zur Ausführung des Dienstes erforderlichen Daten durch das Übertragungsprotokoll INAP zur Dienstevermittlungseinheit SCP-V und von dort zur anfragenden Dienstevermittlungseinheit SSP des Besucher-Mobilfunknetzes VPLMN rückübertragen (4, 5).

Ergibt die Überprüfung, daß der gewünschte Diensteumfang größer oder gleich dem für den anfragenden Netzknoten gespeicherten Diensteumfang ist, werden Wegeinformationen (routing information) zum Aufbau einer Anrufverbindung zur anfragenden Dienstevermittlungseinheit SSP und von dort zu einer geeigneten Dienstevermittlungseinheit SSPE des Heimat-Mobilfunknetzes HPLMN übertragen. Für die Übertragung der Wegeinformationen von der Dienstevermittlungseinheit SSP des Besucher-Mobilfunknetzes VPLMN zur Dienstesteuerungseinheit SSPE des Heimat-Mobilfunknetzes HPLMN wird ein Übertragungsprotokoll ISUP (ISDN User Part) verwendet. Die Dienstevermittlungseinheit SSPE des Heimat-Mobilfunknetzes HPLMN weist eine den gewünschten Diensteumfang abdeckende Funktionalität zur Durchführung des "CAMEL®"-Dienstes auf (6).Der den "CAMEL"-Dienst unterstützende Netzknoten SSPE stellt durch Verwendung des Übertragungsprotokolls INAP eine Verbindung zur Dienstesteuerungseinheit SCP-H im Heimat-Mobilfunknetz HPLMN her (7), die die erforderlichen Daten zur Abwicklung des netzbezogenen Dienstes der Dienstevermittlungseinheit SSPE bereitstellt und zum Netzknoten SSPE rücksendet. Auf diese Weise kann für den in mehreren Phasen und Stufen einzuführenden netzbezogenen "CAMEL®"-Dienst jeweils der von dem anfragenden Netzknoten unterstützte Diensteumfang überprüft und eine gemeinsame maximal mögliche Diensteebene zwischen den miteinander kommunizierenden Netzknoten netzübergreifend ermittelt werden. Sollen netzbetreiberspezifische Dienste im Heimat-Mobilfunknetz HPLM unterstützt werden, die einen Diensteumfang erfordert, der von dem anfragenden Netzknoten nicht zur Verfügung gestellt werden kann oder will, muß die Anrufverbindung entweder zu einem Netzknoten - vorzugsweise im Heimat-Mobilfunknetz HPLM - durchgeschaltet werden, der den geforderten Diensteumfang unterstützt, oder ausgelöst werden. Alternativ dazu kann auch der befragte Netzknoten darüber informiert werden, daß der Dienst - beispielsweise wegen nicht durchführbarer oder gewünschter Realisierung oder aus Sicherheitsgründen - nicht unterstützt wird.

## Patentansprüche

1. Verfahren zur Unterstützung von Diensten in Netzknoten von Telekommunikationsnetzen, bei dem von einem anfragenden Netzknoten (GMSC, VLR) eine Nachricht (SRI, LUP) an einen anderen Netzknoten (HLR) gerichtet wird, mit der Daten (SFSD, SFSD') zur Abwicklung eines Dienstes angefordert werden, und bei dem die angeforderten Daten zum anfragenden Netzknoten (GMSC, VLR) übertragen werden,
**dadurch gekennzeichnet,**
- **daß** in der Nachricht (SRI, LUP) Informationen (GNR, VNR) zur Identifikation des anfragenden Netzknotens (GMSC, VLR) und des Telekommunikationsnetzes, sowie Informationen (V, SV) zur Identifikation eines Netzknotenherstellers und einer zur Ausführung des Dienstes vom Netzknotenhersteller aktuell unterstützten Programmversion zusätzlich mitgesendet werden,
- **daß** mit den in der Nachricht (SRI, LUP) mitgesendeten Informationen (GNR, V, SV bzw. VNR, V, SV) eine Dienstetabelle (SST) in dem befragten Netzknoten (HLR) adressiert wird, in der jeweils zusätzlich zum unterstützten Dienst (INV1, CCBS) Informationen über den anfragenden Netzknoten (GMSC, VLR) und das Telekommunikationsnetz (D1, D2), über den Netzknotenhersteller (SIE, ERI) und die vom Netzknotenhersteller (SIE, ERI) eingerichete Programmversion (SR4.0, R5.0) gespeichert sind und
- **daß** durch Vergleich der von dem anfragenden Netzknoten (GMSC, VLR) gesendeten Informationen mit den in der Dienstetabelle adressierten Informationen eine größtmögliche unterstützte Diensteebene von dem befragten Netzknoten (HLR) ermittelt wird.

2. Verfahren nach Anspruch 1,
**dadurch gekennzeichnet,**
**daß** für einen Netzknoten, in dem Angaben über die Informationen zu Netzknotenhersteller und/oder unterstützter Programmversion fehlen, die Dienste mit dem niedrigsten Dienstegrad unterstützt werden.

3. Verfahren nach Anspruch 1 oder 2,
**dadurch gekennzeichnet,**
**daß** für Netzknoten, die eine unbekannte Information zum Netzknotenhersteller empfangen, die Dienste mit dem niedrigsten Dienstegrad unterstützt werden.

4. Verfahren nach einem der vorhergehenden Ansprüche,
**dadurch gekennzeichnet,**
**daß** jedem Netzknotenhersteller (SIE, ERI, ALC) eine feste Kennung zu dessen Identifikation fest zugeteilt wird.

5. Verfahren nach einem der vorhergehenden Ansprüche,
**dadurch gekennzeichnet,**
**daß** die Netzknoten von Teilnehmerdatenbasen (VLR, HLR) und Mobilvermittlungsstellen (GMSC) eines oder mehrerer Mobilfunknetze gebildet werden.

6. Verfahren nach Anspruch 5,
**dadurch gekennzeichnet,**
**daß** der anfragende Netzknoten (GMSC, VLR) und der befragte Netzknoten (HLR) in verschiedenen Netzen eines länderübergreifenden Mobilfunknetzes angeordnet sind.

7. Verfahren nach Anspruch 5 oder 6,
**dadurch gekennzeichnet,**
**daß** der anfragende Netzknoten von einer Mobilvermittlungsstelle (GMSC) oder einer dezentralen Teilnehmerdatenbasis (VLR) und der befragte Netzknoten (HLR) von einer dezentralen Teilnehmerdatenbasis gebildet werden.

8. Verfahren nach einem der Ansprüche 1 bis 4,
**dadurch gekennzeichnet,**
**daß** die Netzknoten von Dienstesteuerungseinheiten (SCP-V, SCP-H) und Dienstevermittlungseinheiten (SSP, SSPE) eines Intelligenten Netzes gebildet werden.

9. Verfahren nach Anspruch 8,
**dadurch gekennzeichnet,**
**daß** der anfragende Netzknoten von einer Dienstevermittlungseinheit (SSP) und der befragte Netzknoten von einer Dienstesteuerungseinheit (SCP-H) gebildet werden und daß zur Unterstützung eines netzbezogenen Dienstes die zusätzlich in der Nachricht mitgesendeten Informationen zwischen der Dienstevermittlungseinheit (SSP) eines ersten Telekommunikationsnetzes (VPLMN) und der Dienstesteuerungseinheit (SCP-H) eines zweiten Telekommunikationsnetzes (HPLMN) netzübergreifend übertragen werden.

## Claims

1. Process for supporting services in network nodes of telecommunication networks, in which process a message (SRI, LUP) is directed by an enquiring network node (GMSC, VLR) to another network node (HLR), with which data (SFSD, SFSD') for handling a service are requested, and in which process the requested data are transmitted to the enquiring network nodes (GMSC, VLR),
**characterised in that**
- information items (GNR, VNR) for identifying the enquiring network node (GMSC, VLR) and the telecommunication network, as well as information items (V, SV) for identifying a network node manufacturer and a program version currently supported by the network node manufacturer for running the service, are additionally sent in the message (SRI, LUP),
- along with the information items (GNR, V, SV or VNR, V, SV, respectively) sent with the message (SRI, LUP), a service table (SST) is addressed in the interrogated network node (HLR), in which service table, in addition to the supported service (INV1, CCBS), information items concerning the enquiring network node (GMSC, VLR) and the telecommunication network (D1, D2), and concerning the network node manufacturer (SIE, ERI) and the program version (SR4.0, R5.0) created by the network node manufacturer (SIE, ERI), are stored, and that
- a highest possible supported service level is determined by the interrogated network node (HLR) by comparing the information items sent by the enquiring network node (GMSC, VLR) with the information items addressed in the service table.

2. Process according to Claim 1,
**characterised in that**
the services with the lowest service rating are supported for a network node in which there are no details about the information items on network node manufacturer and/or supported program version.

3. Process according to Claim 1 or 2,
**characterised in that**
the services with the lowest service rating are supported for network nodes which receive an unknown information item on the network node manufacturer.

4. Process according to one of the preceding Claims,
**characterised in that**
a permanent identification code is permanently assigned to each network node manufacturer (SIE, ERI, ALC) for its identification.

5. Process according to one of the preceding Claims,
**characterised in that**
the network nodes are formed from subscriber databases (VLR, HLR) and mobile service switching centres (GMSC) or one or more mobile radio networks.

6. Process according to Claim 5,
**characterised in that**
the enquiring network node (GMSC, VLR) and the interrogated network node (HLR) are disposed in different networks of a global mobile radio network.

7. Process according to Claim 5 or 6,
**characterised in that**
the enquiring network nodes are formed from a mobile service switching centre (GMSC) or a decentralised subscriber database (VLR) and the interrogated network nodes (HLR) are formed from a decentralised subscriber database.

8. Process according to one of Claims 1 to 4,
**characterised in that**
the network nodes are formed from service control points (SCP-V, SCP-H) and service switching points (SSP, SSPE) of an intelligent network.

9. Process according to Claim 8,
**characterised in that**
the enquiring network nodes are formed from a service switching point (SSP) and the interrogated network nodes are formed from a service control point (SCP-H), and that, for supporting a network-related service, the information items additionally sent in the message are transmitted across networks between the service switching point (SSP) of a first telecommunication network (VPLMN) and the service control point (SCP-H) of a second telecommunication network (HPLMN).

## Revendications

1. Procédé pour le soutien de services dans des noeuds de réseaux de télécommunication, dans lequel un message (SRI, LUP) avec lequel des données (SFSD, SFSD') sont demandées pour le développement d'un service est adressé par un noeud de réseau interrogateur (GMSC, VLR) à un autre noeud de réseau (HLR) et dans lequel les données demandées sont transmises au noeud de réseau interrogateur (GMSC, VLR),
**caractérisé par le fait que**
- dans le message (SRI, LUP), on envoie en même temps des informations (GNR, VNR) pour l'identification du noeud de réseau interrogateur (GMSC, VLR) et du réseau de télécommunication ainsi que des informations (V, SV) pour l'identification d'un fabricant de noeuds de réseau et d'une version de programme actuellement soutenue par le fabricant de noeuds de réseau pour la réalisation du service,
- avec les informations (GNR, V, SV respectivement VNR, V, SV) envoyées en même temps dans le message (SRI, LUP), on adresse dans le noeud de réseau interrogé (HLR) un tableau de services (SST) dans lequel sont mémorisées à chaque fois en plus du service soutenu (INV1, CCBS) des informations sur le noeud de réseau interrogateur (GMSC, VLR) et sur le réseau de télécommunication (D1, D2), sur le fabricant de noeuds de réseau (SIE, ERI) et sur la version de programme (SR4.0, R5.0) installée par le fabricant de noeuds de réseau (SIE, ERI), et
- en comparant les informations envoyées par le noeud de réseau interrogateur (GMSC, VLR) aux informations adressées dans le tableau de services, le noeud de réseau interrogé (HLR) détermine un niveau de service maximal soutenu.

2. Procédé selon la revendication 1,
**caractérisé par le fait que**, pour un noeud de réseau dans lequel il manque des indications sur les informations concernant le fabricant de noeuds de réseau et/ou la version de programme soutenue, les services sont soutenus avec le degré de service minimal.

3. Procédé selon la revendication 1 ou 2,
**caractérisé par le fait que**, pour des noeuds de réseau qui reçoivent une information inconnue concernant le fabricant de noeuds de réseau, les services sont soutenus avec le degré de service minimal.

4. Procédé selon l'une des revendications précédentes,
**caractérisé par le fait qu'**on attribue à chaque fabricant de noeuds de réseau (SIE, ERI, ALC) un identificateur fixe pour son identification.

5. Procédé selon l'une des revendications précédentes,
**caractérisé par le fait que** les noeuds de réseau sont formés par des bases de données d'abonnés (VLR, HLR) et par des centres de commutation du service mobile (GMSC) d'un ou plusieurs réseaux de radiocommunication du service mobile.

6. Procédé selon la revendication 5,
**caractérisé par le fait que** le noeud de réseau interrogateur (GMSC, VLR) et le noeud de réseau interrogé (HLR) sont placés dans des réseaux différents d'un réseau de radiocommunication du service mobile international.

7. Procédé selon la revendication 5 ou 6,
**caractérisé par le fait que** le noeud de réseau interrogateur est formé par un centre de commutation du service mobile (GMSC) ou par une base de données d'abonnés décentralisée (VLR) et le noeud de réseau interrogé (HLR) est formé par une base de données d'abonnés décentralisée.

8. Procédé selon l'une des revendications 1 à 4,
**caractérisé par le fait que** les noeuds de réseau sont formés par des unités de commande de services (SCP-V, SCP-H) et par des unités de commutation de services (SSP, SSPE) d'un réseau intelligent.

9. Procédé selon la revendication 8, **caractérisé par le fait que** le noeud de réseau interrogateur est formé par une unité de commutation de services (SSP) et le noeud de réseau interrogé par une unité de commande de services (SCP-H) et que, pour le soutien d'un service se rapportant au réseau, les informations envoyées en plus en même temps dans le message sont transmises au-delà des réseaux entre l'unité de commutation de services (SSP) d'un premier réseau de télécommunication (VPLMN) et l'unité de commande de services (SCP-H) d'un deuxième réseau de télécommunication (HPLMN).
